Europäisches Patentamt

(19) European Patent Office

Office européen des brevets

(11) Publication number: **0 183 158**
**A2**

(12) **EUROPEAN PATENT APPLICATION**

(21) Application number: 85114617.5

(22) Date of filing: 18.11.85

(51) Int. Cl.⁴: **C 08 F 8/00**

(30) Priority: 23.11.84 US 674444

(43) Date of publication of application:
04.06.86 Bulletin 86/23

(84) Designated Contracting States:
BE DE FR GB IT NL

(71) Applicant: **THE DOW CHEMICAL COMPANY**
**2030 Dow Center Abbott Road P.O. Box 1967**
**Midland, MI 48640(US)**

(72) Inventor: **Boom, W. Steven**
**4216 W. Wackerly**
**Midland Michigan 48640(US)**

(72) Inventor: **Harris, William I.**
**2806 St. Mary's Drive**
**Midland Michigan 48640(US)**

(74) Representative: **Sternagel, Hans-Günther, Dr. et al,**
**Patentanwälte Dr. M. Hann Dr. H.-G. Sternagel**
**Marburger Strasse 38**
**D-6300 Giessen(DE)**

(54) Method for preparation of anion exchange resins having very low chlorine content.

(57) A process for preparing anion exchange resins containing less than 0.5 equivalent percent total chloride based on active sites of resin, involves preparing cross-linked polymer beads by (a) forming a suspension of a plurality of cross-linked free-radical matrices in a continuous phase and (b) contacting said free-radical matrices with a monomer feed comprising at least one monomer under conditions such that said monomer feed is imbibed by said free-radical matrices and the free radicals in said free-radical matrices catalyze the polymerization of said monomer feed with said free-radical matrices, haloalkylating and functionalizing said cross-linked polymer beads, and contacting the functionalized cross-linked polymer beads at a temperature less than 60°C with an effective amount of at least one agent exchangeable with chloride ions.

# METHOD FOR PREPARATION OF ANION EXCHANGE RESINS HAVING VERY LOW CHLORINE CONTENT

This invention concerns to ion exchange resins, and in particular to anion exchange resins having a low chlorine content.

Anion exchange resins are employed in numerous water treatment applications in order to purify streams which are in contact with metals, especially ferrous metals. Unfortunately, such resins contain chlorine in the form of chloride ions and organic chloride which can leach into the treated fluid to cause corrosion of said metals.

Chloride ion can be displaced from a resin by treating the resin with (1) solutions containing ions for which the resin has a selectivity in preference approaching, equaling or exceeding chloride; (2) highly concentrated solutions containing ions for which the resin has low to high selectivity; and (3) fluids containing complexes for which the resin has high affinity. Additionally, resins having high chloride content can lose chloride to relatively pure solvents

0183158

or solvent mixtures under conditions of high temperature, pressure, and the like.

Unfortunately, conversion of the normal chloride form of an anion exchange resin to the hydroxide form by the prior art methods has not achieved the goal of completely removing "active" chloride ions. Typical low chloride content anion exchange resins contain 2 to 10 equivalent percent·chloride, based ·on total exchangeable ions. Such resins are clearly limited in the amount of their functional capacity in the hydroxide form.

More recently, as described in U.S. Patent No. 4,025,467, there is disclosed a process for preparing strong base anion exchange resins containing less than 0.5 percent active chloride. Such a process involves the solvolytic displacement of non-ionic chloride ions. Such a process involves treating the resin in an aqueous medium under harshly basic conditions and relatively high temperatures. Such harsh treatments are undesirable because they are time consuming, uneconomical; and provide ion exchange resins which are more susceptible to breakage and have lower exchange capacity than is desirable.

In view of the deficiencies of the prior art, it would be highly desirable to provide a process for preparing an ion exchange resin having a very low chloride content, which resin can be prepared in the absence of undesirable harsh conditions.

In one aspect, the present invention is a process for preparing anion exchange resins containing less than 0.5 equivalent percent total chloride based on active sites of the resin, said process comprising: (1) preparing cross-linked polymer beads by (a) forming a suspension of a plurality of cross-linked free-radical matrices in an aqueous continuous phase and (b) contacting said free-radical matrices with a monomer feed comprising at least one monomer under conditions such that said monomer feed is imbibed by said free-radical matrices and the free radicals in said free-radical matrices catalyze the polymerization of said monomer feed with said free-radical matrices, (2) haloalkylating said cross-linked polymer beads, (3) functionalizing the haloalkylated cross-linked polymer beads with an aminating agent, and (4) displacing chloride ions from the funtionalized cross-linked polymer beads, said process characterized in that chloride ions are displaced by contacting the functionalized cross-linked polymer beads at a temperature less than 60°C with an effective amount of at least one agent exchangeable with chloride ions.

In another aspect, the present invention is an anion exchange resin essentially free of active chloride. For example, said anion exchange resin can be produced in accordance with the process of this invention.

The resins of this invention are useful in numerous water treatment applications where purified streams of water are desirable. The resins have low levels of both organic and inorganic chloride.

The monomers useful in the preparation of the copolymer particles are advantageously suspension polymerizable ethylenically unsaturated monomers. Such suspension polymerizable monomers are well known in the art and reference is made to Polymer Processes, edited by Calvin E. Schildknecht, published in 1956 by Interscience Publishers, Inc., New York, Chapter III, "Polymerization in Suspension" by E. Trommsdoff and C. E. Schildknecht, pp. 69-109 for purposes of illustration. In Table II on pp. 78-81 of Schildknecht are listed diverse kinds of monomers which can be employed in the practice of this invention. Suitable monoethylenically unsaturated monomers and polyethylenically unsaturated monomers useful in the practice of this invention are also disclosed in U.S. Patent No. 4,419,245. Of such suspension polymerizable monomers, of particular interest herein are the water-insoluble monomers including the monovinylidene aromatics such as styrene, vinyl naphthalene, alkyl substituted styrenes (particularly monoalkyl substituted styrenes such as vinyltoluene and ethyl vinylbenzene) the polyvinylidene aromatic such as divinylbenzene, divinyltoluene, divinyl xylene, divinyl naphthalene, trivinylbenzene, divinyl diphenyl ether, and the like; esters of $\alpha,\beta$-ethylenically unsaturated carboxylic acids, particularly acrylic or methacrylic acid, such as methyl methacrylate, ethyl acrylate, diverse alkylene diacrylates and alkylene dimethacrylates, and mixtures of one or more of said monomers. Of said monomers, the monovinylidene aromatics, particularly styrene or a mixture of styrene with a monoalkyl substituted styrene; the polyvinylidene aromatics, particularly divinylbenzene; esters of $\alpha,\beta$-ethylenically unsaturated carboxylic acids, particularly methyl methacrylate or mixtures containing methyl methacrylate, particularly a mixture of styrene and divinylbenzene or styrene, divinylbenzene and methyl methacrylate are preferably employed herein.

33,163-F                    -4-

Preferably, the initiator, useful herein, is a conventional chemical initiator useful as a free radical generator in the polymerization of ethylenically unsaturated monomers. Representative of such initiators are chemical initiators including azo compounds such as azobisisobutyronitrile; peroxygen compounds such as benzoyl peroxide, t-butyl peroctoate, t-butyl perbenzoate and isopropylpercarbonate, and the like. Several catalysts are disclosed in U.S. Patent Nos. 4,192,921; 4,246,386; and 4,283,499. The initiator is employed in an amount sufficient to cause the copolymerization of the monomeric components in the monomer mixture. Such amount will generally vary depending on a variety of factors including the type of initiator employed, and the type and proportion of monomers in the monomer mixture used herein. Generally, the initiator is employed in amounts from 0.02 to 1, preferably from 0.05 to 0.5, weight percent based on the total weight of the monomer mixture.

The monomers are advantageously suspended, with agitation, in a suitable suspending medium such as water or other aqueous liquid. Suspending agents useful herein are those materials which assist in maintaining a dispersion of the droplets in the aqueous liquid. In general, suspending agents conventionally employed hereto in the suspension polymerization of mono- and polyethylenically unsaturated monomers are advantageously employed. Representative of such suspending agents are gelatin, polyvinyl alcohol, magnesium silicate, hydroxyethylcellulose, methylcelluloses, carboxymethylmethylcellulose, and the like. Suitable suspending agents are disclosed in U.S. Patent No. 4,419,245.

33,163-F                    -5-

While the amount of the suspending medium (i.e., aqueous phase) advantageously employed herein, will vary depending on the type and amount of the suspending agent, the amount of monomer, in general, the suspending medium is employed in amounts from 30 to 70, preferably from 40 to 60, weight percent based on the weight of the monomer/suspending medium mixture.

The copolymer beads of this invention are advantageously prepared by forming a cross-linked, free-radical containing matrix (hereinafter "free-radical matrix"), and contacting said free-radical matrix with a monomer feed comprising at least one monomer under conditions such that free radicals catalyze the polymerization of said monomer to form polymer beads. Said polymerization is carried out as a suspension polymerization wherein the polymeric matrix and the monomers to be polymerized are suspended in a suitable suspending medium which is generally an aqueous solution containing a suspension stabilizer.

The prepared free-radical matrix is suspended in an appropriate suspending medium. In general, said suspending medium is a liquid in which both the free-radical matrix and the monomers to be contacted therewith are insoluble. Said suspending medium is typically an aqueous solution containing from 0.1 to 1.5 weight percent of a suspension stabilizer. In addition, the suspension can suitably contain polymerization inhibitors, dispersants, and other materials known to be advantageously employed in the suspension polymerization of ethylenically unsaturated monomers.

Phase separating organic materials, which are useful herein, are preferably solvents for the monomer, but an agent which does not dissolve the copolymer. The phase separating organic material is inert in that it does not react with the monomers (with which it is soluble), the copolymers (with which it is insoluble), or the suspending medium. Generally, organic materials having boiling points greater than 60°C are employed. Suitable phase-separating organic materials include aromatic hydrocarbons and aliphatic hydrocarbons. Examples include iso-octane, hexane, benzene, toluene, xylene, and the like as well as those non-halogenated "non-solvents" disclosed in U.S. Patent No. 3,716,482. The amount of phase separating organic material which is employed can vary and can range from 10 to 60 percent, based on the weight of the organic material and monomer employed in the initial suspension mixture.

The suspension is contacted with a monomer feed comprising at least one ethylenically unsaturated monomer (and preferably a cross-linking monomer) under conditions such that the free radicals contained in the free-radical matrix catalyze the polymerization of said monomer feed. Such techniques are taught in U.S. Patent No. 4,419,245 and U.S. Patent Application Serial No. 506,911, filed June 22, 1983. Most preferably, it is desirable to prepare copolymer particles using the techniques taught in the aforementioned U.S. Patent Application Serial No. 506,911. The monomer feed is preferably continuously added to the suspension. Generally, the amount of monomer feed which is employed in the monomer feed can vary but is generally less than 80 percent, based on the weight of the total amount of monomer which is employed. The monomer feed is added over a period of time which can vary, but is preferably from 1 to 10 hours.

The polymerization conditions are continued until polymerization of monomer is essentially complete. The reaction can be finished by raising the temperature of the reaction mixture. If the copolymer beads are macroporous in character they are subjected to conditions such that the organic phase separating material is removed from the beads. This can be accomplished using a process such as distillation. The copolymer beads can be separated using conventional techniques.

The size of the copolymer particles or beads of this invention can vary and is advantageously in the range from 50 to 2000 microns (µm), preferably from 200 to 1200 µm. Control of the size of the beads can be achieved by controlling the agitation rate, suspending agent, and the amount of monomers employed, or by the initial size of the free-radical matrix and the amount of monomer feed.

The copolymer particles or beads are converted to anion beads using techniques well-known in the art for converting cross-linked addition polymers of a mono- and polyethylenically unsaturated monomer to such resins. In the preparation of strong and weak base resins from copolymer beads such as cross-linked polystyrene beads, the beads are advantageously haloalkylated, preferably halomethylated, most preferably chloromethylated, and the ion active exchange groups subsequently attached to the haloalkylated copolymer. Methods for haloalkylating the cross-linked addition copolymers and the haloalkylating agents included in

0183158

such methods are also well-known in the art. Reference is made thereto for the purposes of this invention. Illustrative of such are U.S. Patent Nos. 2,642,417; 2,960,480; 2,597,492; 2,597,493; 3,311,602; 2,616,817 and 4,025,467 and Ion Exchange by F. Helfferich, published in 1962 by McGraw-Hill Book Company, N.Y. Typically, the haloalkylation reaction consists of swelling the cross-linked addition copolymer with a haloalkylating agent, preferably bromomethylmethyl ether, chloromethylmethyl ether or a mixture of formaldehyde and hydrochloric acid, most preferably chloromethylmethyl ether and then reacting the copolymer and haloalkylating agent in the presence of a Friedel-Crafts catalyst such as zinc chloride, iron chloride or aluminum chloride. Such haloalkylated copolymers provide basis for active sites in the resin.

Generally, ion exchange beads are prepared from the haloalkylated bead by contacting said bead with a compound capable of displacing the halogen of the haloalkyl group and which, upon reaction, forms an active ion exchange group. That is, the cross-linked polymer beads are functionalized. Such compounds and methods for preparing ion exchange resins therefrom (i.e., weak base resins and strong base resins) are well known in the art and U.S. Patent Nos. 2,632,000; 2,616,877; 2,642,417; 2,632,001; 2,992,544 and F. Helfferich supra are illustrative thereof. Typically, a weak base resin is prepared by contacting the haloalkylated cross-linked polymer bead with ammonia, a primary amine or a secondary amine, or polyamines such as ethylene diamine, propylene diamine, and the like. Representative primary and secondary amines include the methyl amine, ethyl amine, butyl amine, cyclohexyl

0183158

amine, dimethyl amine, diethyl amine and the like, as well as various polyamines. Strong base ion exchange resins are prepared using tertiary amines such as trimethyl amine, triethyl amine, tributyl amine, dimethylisopropanol amine, ethylmethylpropyl amine, dimethylamino ethanol, or the like as aminating agents.

Amination generally comprises heating a mixture of the haloalkylated polymer beads and at least a stoichiometric amount of the aminating agent, (i.e., ammonia or the amine) to a temperature sufficient to displace the halogen atom attached to the carbon atom α to the aromatic nucleus of the polymer with aminating agent. A reaction medium such as water, ethanol, methanol, methylene chloride, ethylene dichloride, dimethoxymethylene, or combinations thereof is optionally, but advantageously employed. Conventionally, amination is carried out at conditions such that anion exchange sites (i.e., active sites) are uniformly dispersed throughout the entire bead.

Low chloride resins are prepared by converting functionalized haloalkylated copolymer particles using a process which most desirably comprises two sequential steps. Two steps are desirably required due to the difference in selectivity between the chloride ion and the hydroxide. The selectivity of the excess strong base group for any particular anion depends somewhat on the particular strong base group employed, the resin, matrix and like factors. However, Wheaton and Bauman in Industrial Engineering Chemistry, Vol. 43, page 1088 (1951), identify the following selectivity sequence of general purpose anion exchange resins:

salicylate>iodide >phenol>bisulfate>nitrite>bromide-
>cyanide>bisulfite>nitrate>chloride>bicarbonate-
>dihydrogen phosphate>formate>acetate>aminoacetate-
>hydroxide>fluoride. In addition, ion exchangers in general tend to prefer the counterion having the highest valence, that having the smallest hydrated equivalent volume, that with the greater polarizability, that which interacts more strongly with the fixed ionic groups or with the matrix and that which participates least in complex formation with the coanion. Most preferably, the first step of the sequence involves the contacting of the resin with a solution of carbonate, bicarbonate, or mixture thereof. The second step requires the contacting of the resin with a solution of hydroxide. Alternatively, use of a one step process only using hydroxide can be employed.

The amount of carbonate, bicarbonate or mixture thereof typically ranges from 20 to 50, preferably 30 to 40 bed volumes per bed volume of resin. The amount of carbonate can range from 0 to 100, preferably 70 to 85; and the amount of bicarbonate can range from 0 to 100, preferably 15 to 30 equivalent percent. Most desirably, the carbonate, bicarbonate or mixture thereof is employed in an aqueous form as a solution in water. Typically, such a mixture is employed as about a 5 to a 10 weight percent amount in water. The amount of carbonate which is employed can range from greater than 0 to 30 weight percent in water, while the amount of bicarbonate can range from greater than 0 to 13 weight percent in water.

The amount of hydroxide which is employed preferably ranges from 50 to 70 bed volume per bed volume of resin when the one step process of treatment with hydroxide is employed. When the preferable pretreatment with carbonate and/or bicarbonate is employed, 5 to 10 bed volumes hydroxide per bed volume of resin can be suitably employed. The amount of hydroxide is employed as an aqueous solution which can vary but preferably as a 10 to 20 percent solution in water.

The temperature at which the process is performed can vary below 60°C, more preferably below 50°C, most preferably room temperature.

The flow rate at which the agents are added can vary from 60 to 100 ml/minute, through a 1 inch (2.54 cm) column.

The following examples are intended to illustrate the invention and are not intended to limit the scope thereof in any way. All parts and percentages are by weight based on the weight of the organic and water phases unless otherwise noted.

Example 1

Into a 3-liter, stainless steel reactor equipped with an agitator were loaded 20 parts per hundred by weight of 0.3 percent cross-linked styrene/-divinylbenzene copolymer seed having a particle size of 110 to 130 μm and sufficient water to suspend the seed particles. Further added, with agitation, was an initial monomer charge comprising 1.6 parts divinylbenzene (DVB), 27.9 parts styrene, 0.058 part t-butyl-peroctoate (TBPO) (based on the total weight of all

33,163-F

monomers employed), 0.039 part t-butylperbenzoate (TBPB) (based on the total weight of all monomers employed), 0.52 part gelatin, 0.15 part sodium lauryl sulfate and 0.24 part sodium dichromate. Water was then added in an amount such that the weight phase ratio is 1.1 after the addition of the monomer feed. The reaction mixture was then heated to 78°C and maintained at 78°C for 2.5 hours, at which time a monomer feed of 96.4 percent of styrene and 2 percent of 100 percent active DVB was begun. The monomer feed was fed at a constant rate into the reactor over a 4 hour period until said monomer feed comprised 55.2 percent by weight of the combined weight of the initial charge and the monomer feed. The reaction mixture was held at 78°C for an additional 3.5 hours and then raised to 110°C for approximately 2 hours.

Example 2

Into a 3-liter, stainless steel reactor equipped with an agitator were loaded 20 parts per hundred by weight of 0.3 percent cross-linked styrene/-divinylbenzene copolymer seed and sufficient water to suspend the seed particles. Further added, with agitation, was an initial monomer charge comprising 2.1 parts DVB, 21.0 parts styrene, 0.058 part TBPO (based on the total weight of all monomers employed), 0.039 part TBPB (based on the total weight of all monomers employed), 0.52 part gelatin, 0.15 part per hundred sodium lauryl sulfate, and 0.24 part sodium dichromate. Water was then added in an amount such that the weight phase ratio is 1.1 after the addition of the monomer feed. The reaction mixture was then heated to 78°C and maintained at 78°C for 2.5 hours, at which time a

33,163-F

monomer feed of 96.4 percent of styrene and 2.0 percent of 100 percent active DVB was begun. The monomer feed was fed at a constant rate into the reactor over a 3.7 hour period until said monomer feed comprises 55.2 percent by weight of the combined weight of the initial charge and the monomer feed. The reaction mixture was held at 78°C for an additional 2.3 hours and then raised to 110°C for approximately 2 hours.

The copolymer beads of Example 1 and this example are chloromethylated by reacting the beads with an excess of chloromethylmethyl ether in the presence of ferric chloride. The chloromethylated beads are then reacted with trimethylamine to form a strong base anion exchange resin bearing a plurality of quaternary ammonium ions.

Example 3

The resin of Example 1 was loaded into a 1 inch (2.54 cm) glass column at room temperature and converted to its carbonate/bicarbonate form by elution at the rate of 65 ml/minute with 60 bed volumes of a 0.14 N $NaCO_3$/$NaHCO_3$ solution (the solution was 88 equivalent percent $NaCO_3$ and 12 equivalent percent $NaHCO_3$). Subsequently, after elution with $NaCO_3$/$NaHCO_3$ was complete, the column was eluted at the rate of 5 ml/minute with 5 bed volumes of a 15 percent active aqueous sodium hydroxide solution. The treated resin was isolated and is designated as Sample No. 1. The total chloride content, water retention capacity and dry weight capacity are presented in Table I.

In a like manner was treated the resin of Example 2. This isolated sample was designated as Sample No. 2, and results are presented in Table I.

The dry weight capacity of the resin was determined by drying a sample of the resin in the chloride form under an infrared lamp on a moisture balance until a constant weight was obtained. The dried resin was then cooled to room temperature in a closed vessel. The dried resin (0.5 gram) was weighed into a suitable flask. The resin was then heated to 70° to 80°C with 250 ml of distilled water, 50 ml of 20 percent (w/w) sulfuric acid and 5 g $Na_2SO_4$ for 5 minutes. The mixture was cooled and titrated with 0.1 N $AgNO_3$ to an endpoint as indicated using a chloride sensitive electrode. The dry weight capacity was then reported as meq/g of dry resin.

## TABLE I

| Sample[1] | Total ppm $Cl^{\ominus}$ | DWC[2] | WRC[3] |
|---|---|---|---|
| 1 | 92 | 3.79 | 51.8 |
| 2 | 117 | 3.15 | 48.4 |
| C-1* | 820 | 4.01 | 45.8 |
| C-2* | 400 | 4.53 | 57.0 |

*Not an example of the invention.

[1]Sample Nos. C-1 and C-2 are commercially available anion exchange resins which are in the $OH^{\ominus}$ form and which are prepared using batch polymerization methods.

[2]Dry weight capacity in meq/g of dry resin.

[3]Water retention capacity in percent $H_2O$.

The data in Table I illustrate the low chloride content of samples of the invention as compared to commercially available samples. Total chloride content is that total chloride which includes organic chloride (i.e., from a benzyl chloride source) and ionic chloride.

The physical properties of the comparative samples and the examples of this invention are similar.

Claims

1.   A process for preparing anion exchange resins containing less than 0.5 equivalent percent total chloride, based on active sites of resin said process comprising:

        (1)   preparing cross-linked polymer beads by

            (a)   forming a suspension of a plurality of cross-linked free-radical matrices in an aqueous continuous phase and

            (b)   contacting said free-radical matrices with a monomer feed comprising at least one monomer under conditions such that said monomer feed is imbibed by said free-radical matrices and the free radicals in said free-radical matrices catalyze the polymerization of said monomer feed with said free--radical matrices,

        (2)   haloalkylating said cross-linked polymer beads,

(3)   functionalizing the haloalkylated cross-linked polymer beads with an aminating agent, and

(4)   displacing chloride ions from the functionalized cross-linked polymer beads, said process characterized in that chloride ions are displaced by contacting the functionalized cross-linked polymer beads at a temperature less than 60°C with an effective amount of at least one agent exchangeable with chloride ions.

2.   The process of Claim 1 wherein said functionalized cross-linked polymer beads are first contacted with an effective amount of carbonate, bicarbonate, or combination thereof; and then with an effective amount of hydroxide.

3.   The process of Claim 1 wherein said functionalized cross-linked polymer beads are contacted with an effective amount of hydroxide.

4.   The process of Claim 1 wherein said functionalized cross-linked polymer beads are contacted at a temperature less than 50°C with an effective amount of at least one agent exchangeable with chloride ions.

5.   An anion exchange resin which is produced in accordance with the process of Claim 1.